# EUROPÄISCHE PATENTSCHRIFT

(11) **EP 2 922 620 B1**
(45) Veröffentlichungstag und Bekanntmachung des Hinweises auf die Patenterteilung: **10.01.2018**
(21) Anmeldenummer: 13786173.8
(22) Anmeldetag: 05.11.2013
(51) Int. Cl.: B01D 71/80, B01D 69/08, B01D 69/02

(54) **VERFAHREN ZUR HERSTELLUNG EINER INTEGRAL-ASYMMETRISCHEN HOHLFADEN-POLYMERMEMBRAN AUS EINEM AMPHIPHILEN BLOCKCOPOLYMER, ERHALTENE HOHLFADENMEMBRAN UND DEREN VERWENDUNG**
METHOD FOR PRODUCING AN INTEGRAL-ASYMMETRIC HOLLOW-FIBRE POLYMER MEMBRANE CONSISTING OF AN AMPHIPHILIC BLOCK COPOLYMER, THE HOLLOW-FIBRE MEMBRANE OBTAINED AND THE USE THEREOF
PROCÉDÉ POUR LA PRODUCTION D'UNE MEMBRANE POLYMÈRE À FIL CREUX INTÉGRALE ASYMÉTRIQUE À PARTIR D'UN COPOLYMÈRE À BLOCS AMPHIPHILE, MEMBRANE À FIL CREUX OBTENUE ET SON UTILISATION

(30) Priorität: 22.11.2012 DE 102012221378
(43) Veröffentlichungstag der Anmeldung: 30.09.2015
(73) Patentinhaber: Helmholtz-Zentrum Geesthacht Zentrum für Material- und Küstenforschung GmbH, 21502 Geesthacht (DE)
(72) Erfinder: ABETZ, Volker, 21335 Lüneburg (DE); RADJABIAN, Maryam, 21502 Geesthacht (DE); KOLL, Joachim, 21493 Schwarzenbek (DE); BUHR, Kristian, 20253 Hamburg (DE); HANDGE, Ulrich, 21335 Lüneburg (DE); LADEMANN, Brigitte, 21493 Schwarzenbek (DE)
(74) Vertreter: Seemann & Partner Patentanwälte mbB
(86) Internationale Anmeldenummer: PCT/EP2013/003320
(87) Internationale Veröffentlichungsnummer: WO 2014/079538

(56) Entgegenhaltungen:
- EP-A1- 0 201 604
- EP-A1- 2 145 675
- WO-A1-90/05018
- WO-A1-2009/076174
- WO-A1-2010/051150
- WO-A1-2011/098851
- CN-A- 102 432 782

## Beschreibung

Die Erfindung betrifft ein Verfahren zur Herstellung einer selbststützenden integral-asymmetrischen Hohlfaden-Polymermembran mit isoporöser Außenhaut, poröser Innenhaut und schwammartiger Innenstruktur in einem dry/wet-Spinning-Verfahren. Die Erfindung betrifft weiter eine integral-asymmetrische Hohlfaden-Polymermembran, ein Filtrationsmodul und eine Verwendung.

Damit betrifft die Erfindung das Gebiet der Membran gestützten Mikrofiltration, Ultrafiltration und Nanofiltration. Solche Membranen weisen eine poröse Trennschicht auf, wobei die Größe und Regelmäßigkeit der Poren sowohl die Trenngrenze als auch die Trennschärfe bestimmen. Gewünscht ist hierbei eine möglichst isoporöse Membran, d.h. eine Membran mit einer möglichst regelmäßigen Struktur von Poren, deren Durchmesser möglichst einheitlich ist.

Entsprechende Membranen sind auf verschiedenen Wegen herstellbar. Überwiegend werden Membranen eingesetzt, die nach einem so genannten Phaseninversionsverfahren hergestellt werden. Diese Membranen weisen eine mehr oder weniger große statistische Streuung bei der Verteilung der Porengröße auf. Neben einer geringen Trennschärfe neigen solche Membranen auch zum so genannten "Fouling". Dies ist ein schnelles Verblocken der großen Poren, da ein Großteil der durch die Membran tretenden Flüssigkeit zunächst durch diese großen Poren tritt. Auch das Fouling ist bei isoporösen Membranen deutlich vermindert.

In dem deutschen Patent Nr. 10 2006 045 282 der Anmelderin, die als DE 10 2006 045 282 A1 veröffentlicht ist, ist ein Verfahren offenbart, mit dem Polymermembranen mit isoporösen trennaktiven Oberflächen herstellbar sind. Hierzu wird ein amphiphiles Blockcopolymer in einer Gießlösung mit einem oder mehreren Lösungsmitteln gelöst, zu einem Film ausgestrichen und der Film in ein Fällbad eingetaucht.

Dieses Verfahren nutzt den Umstand aus, dass die Polymerblöcke des amphiphilen Blockcopolymers untereinander nicht mischbar sind. In der Gießlösung bilden die Blockcopolymere daher Mikrophasen aus, beispielsweise eine bekannte Mizellenstruktur mit sphärischen oder zylindrischen Mizellen. In einer kurzen Abdampfzeit verdampft ein oberflächennaher Teil des flüssigen Lösungsmittels, so dass in einer oberflächennahen Schicht des Films die Mikrophasenmorphologie, die sich aufgrund der Selbstorganisation der Polymerblöcke der Blockcopolymere ausgebildet hat, verfestigt, während sich die Blockcopolymere im Bulk der Gießlösung noch stets in Lösung befinden.

Durch das Eintauchen dieses Films in ein Fällbad wird der Rest des Lösungsmittels verdrängt und es findet ein bekannter Phaseninversionsprozess statt, der in einer bekannten schwammartigen Struktur resultiert. In einigen Fällen bleibt dabei die zuvor eingestellte mikrophasenseparierte isoporöse Struktur der oberflächennahen Schicht trotz des Eintauchens in das Fällbad erhalten. Diese geht dann direkt in die schwammartige Struktur über. Weitere Angaben sind in DE 10 2006 045 282 A1 enthalten, deren Offenbarung vollinhaltlich in der vorliegenden Patentanmeldung aufgenommen sein soll.

Eine Übersicht über verschiedene andere Verfahren zur Herstellung isoporöser Membranen ist ebenfalls in DE 10 2006 045 282 A1 der Anmelderin enthalten.

Bislang war es allerdings nicht gelungen, dieses Konzept von Flachmembranen auf Hohlfaden-Membranen zu übertragen. Hohlfaden-Membranen sind aufgrund ihres wesentlich größeren Verhältnisses von Trennoberfläche zu Packungsvolumen in einem Modul für die wirtschaftliche Anwendung sehr interessant, insbesondere bei Anwendungen, die große Membranoberflächen erfordern, wie z.B. bei der Trinkwasseraufbereitung oder in der Dialyse.

Bisher werden Hohlfaden-Membranen für die Ultrafiltration wässriger Systeme hauptsächlich auf der Basis von Polysulfon bzw. Polyethersulfonen oder Polyetherimiden, Polyvinylidenfluorid (PVDF) oder Polyacrylnitril (PAN) durch Phaseninversion von entsprechenden Polymerlösungen hergestellt, die als Hohlfäden gesponnen und in Wasser ausgefällt werden. Diese Membranen zeigen keine isoporöse Struktur und haben aus diesem Grund eine größere Neigung zum Fouling.

Ein Überblick über die jüngeren Entwicklungen bei der Herstellung von polymerischen Hohlfasern ist in dem Artikel Na Peng et al., "Evolution of polymeric hollow fibers as sustainable technologies: Past, present, and future", Progress in Polymer Science 37 (2012), 1401 - 1424, gegeben. Darin ist auch die Technik des Hohlfaserspinnens beschrieben, bei dem eine Spinnlösung mit wenigstens einem Polymer durch eine ringförmige Spinndüse geleitet wird, wobei konzentrisch im Inneren eine weitere Flüssigkeit durch die Spinndüse geleitet wird und den Hohlraum der so geformten Hohlfaser durchläuft. Je nach Wahl der Polymere und der Lösungen, die von außen bzw. innen auf die Hohlfaser einwirken, werden überwiegend dichte Oberflächen erreicht.

In WO 2011/098851 A1 ist ein Verfahren zur Herstellung einer isoporösen selbstorganisierten P4VP-Membran ähnlich zu derjenigen in DE 10 2006 045 282 A1 offenbart, allerdings unter Hinzugabe von Metallen, die mit einem Polymerblock Komplexe bilden. Die zugrunde liegende Gießlösung kann manipuliert werden, um eine Gießstruktur zu bilden, wie etwa eine Folie, einen Faden oder eine Säule.

CN 102432782 A offenbart ein in Wasser unlösliches amphiphiles Triblockcopolymer. Die Erfindung offenbart auch ein Herstellungsverfahren für das Copolymer und eine mit dem amphiphilen Triblockcopolymer blend-modifizierte Polyethersulfon-Hohlfasermembran. Wenn das amphiphile Triblockcopolymer mit Polyethersulfon gemischt ist und eine Polyethersulfon-Hohlfasermembran hergestellt ist, ist das amphiphile Triblockcopolymer schwer auszufällen. Daher wird die Polyethersulfon-Hohlfasermembran mit permanenter Hydrophilizität, Beständigkeit gegen Proteinverschmutzung und ausgezeichneter Blutkompatibilität ausgestattet. Die Polyethersulfon-Hohlfasermembran wird im Bereich der Blutreinigung verwendet.

WO 2010/051150 A1 betrifft eine Polymermembranzusammensetzung. Die Hydrophilizität der Membran wird erhöht, indem ein Matrixpolymer verwendet wird, das mit einer kontrollierten Architektur amphiphiler Block-Copolymere geblendet ist. Die Block-Copolymere werden vorzugsweise in kontrollierter radikalischer Polymerisation erzeugt, um das Blenden und Verarbeiten zu verbessern, die hydrophoben Blöcke in der Membranmatrix zu verankern und die Viskosität der Lösung zu kontrollieren. Die oberflächliche Hydrophilierung erzeugt dann einen höheren Wasserfluss. Die amphiphilen Block-Copolymere können auch die Formung uniformerer Porengrößen befördern und können dabei helfen, kleinere Porengrößen auf der Grundlage der kleinen Skalen der Phasenseparation verursachen, die diesen Materialien inhärent sind.

Ausgehend von diesem Stand der Technik liegt der vorliegenden Erfindung die Aufgabe zugrunde, Hohlfaden-Membranen mit einer isoporösen Porenstruktur in einer trennaktiven Oberfläche zur Verfügung zu stellen, die für Mikrofiltration, Ultrafiltration oder Nanofiltration verwendbar sind.

Die Aufgabe wird gelöst durch ein Verfahren zur Herstellung einer selbststützenden integral-asymmetrischen Hohlfaden-Polymermembran mit isoporöser Außenhaut, bei der die Poren der trennaktiven Außenoberhaut ein Verhältnis der maximalen Porendurchmesser zu den minimalen Porendurchmessern von weniger als 3 aufweisen, poröser Innenhaut und schwammartiger Innenstruktur in einem dry/wet-Spinning-Verfahren mit den folgenden Verfahrensschritten:
- Herstellen einer Polymerlösung mit wenigstens einem Lösungsmittel, in dem wenigstens ein amphiphiles Blockcopolymer mit wenigstens zwei verschiedenen Polymerblöcken gelöst wird, wobei die Blockcopolymere und die Polymerblöcke
- eine geringe Polydispersität von weniger als 1,5 aufweisen und die Polymerlängen der wenigstens zwei Polymerblöcke des amphiphilen Blockcopolymers relativ zueinander so gewählt sind, dass eine Selbstorganisation im Lösungsmittel zur Bildung einer sphärischen, zylindrischen oder cokontinuierlichen, insbesondere gyroidalen, Mizellenstruktur oder Mikrophasenstruktur im Lösungsmittel führt, mit einem Längenverhältnis zwischen etwa 2:1 und etwa 10:1,
   Pressen der Polymerlösung mit einem Überdruck von 0,01 bis 0,5 bar durch eine als Hohlkerndüse oder Mehrfachhohlkerndüse ausgebildete Spinndüse zur Formung eines Hohlfadens, in dessen Mitte eine Flüssigkeitssäule gesponnen wird, die aus einem Fällmittel mit herabgesetzter Fällaktivität besteht, wobei die Flüssigkeitssäule aus einem Gemisch aus wenigstens einem Fällmittel für das wenigstens eine Blockcopolymer und wenigstens einem mit dem Fällmittel mischbaren Lösungsmittel für das wenigstens eine Blockcopolymer besteht, wobei insbesondere zusätzlich wenigstens ein Porenbildner, insbesondere Polyethylenglykol, in der Flüssigkeitssäule vorhanden ist,
- nach Durchlaufen einer Fallstrecke mit einer Länge von 1 cm bis 100 cm in einer Atmosphäre Eintauchen des gesponnenen Hohlfadens in ein Fällbad zur Formung der Hohlfaden-Polymermembran.

Das erfindungsgemäße Verfahren entspricht insofern einem dry/wetspinning-Verfahren, als nach dem Extrudieren des Hohlfadens zunächst eine Fallstrecke ohne äußere Kontaktierung eines flüssigen Fällbades erfolgt ("dry") und anschließend in ein Bad aus einem flüssigen Fällmittel eingetaucht wird ("wet").

Die Durchführung des erfindungsgemäßen Verfahrens führt zur Herstellung von polymeren Hohlfasermembranen mit isoporöser Außenoberfläche, die auf der Selbstorganisation der maßgeschneiderten Blockcopolymere in Mikrophasen, der so genannten Mikrophasenseparation, beruht. Diese isoporöse trennaktive Außenoberfläche geht in eine typische schwammartige Struktur einer durch Fällungsmittel induzierte Phaseninversion hergestellten Membran. Diese schwammartige Struktur verleiht der Hohlfaden-Membran ihre Stabilität und Durchlässigkeit, so dass die Hohlfaden-Membran selbststützend bzw. selbsttragend ist. Dabei führt das Durchlaufen einer Fallstrecke in eine Atmosphäre, also ein zunächst trockener Teil des Prozesses, dazu, dass ein Teil des Lösungsmittels der Polymerlösung verdampft und sich an der Außenoberfläche eine mikrophasenseparierte Struktur verfestigen kann, die das Eintauchen in das Fällbad nach Durchlaufen der Fallstrecke übersteht.

Für die innere Oberfläche der Hohlfaden-Membran wird erfindungsgemäß ein Fällmittel mit herabgesetzter Fällaktivität verwendet. Versuche haben gezeigt, dass ein übliches Fällmittel wie beispielsweise Wasser dazu führt, dass sich eine im Wesentlichen dichte bzw. annähernd dichte Innenhaut bildet. Die so gebildete Innenhaut ist dann so dicht, dass sie Partikel, die die trennaktive Außenhaut durchströmen können, noch festhält. Mit einer solchermaßen flüssigkeitsdichten Innenhaut ist die so gebildete Hohlfaden-Membran für eine Filtration generell ungeeignet. Die Verwendung eines Fällmittels mit herabgesetzter Fällaktivität bewirkt, dass die Oberflächenbildung mit einer geringeren Kinetik abläuft als bei einem üblicherweise verwendeten Fällmittel. Dadurch bleibt der Reaktion genügend Zeit für eine teilweise Entmischung an der inneren Oberfläche, so dass sich Poren in der inneren Oberfläche bilden können, so dass eine Verwendung für Filtrationen ermöglicht wird.

Erfindungsgemäß besteht die Flüssigkeitssäule aus einem Gemisch aus wenigstens einem Fällmittel für das wenigstens eine Blockcopolymer und wenigstens einem mit dem Fällmittel mischbaren Lösungsmittel für das wenigstens eine Blockcopolymer. Dadurch, dass das Lösungsmittel oder die Lösungsmittel mit dem Fällmittel in der Flüssigkeitssäule mischbar ist bzw. sind, wird die Fällaktivität des Fällmittels deutlich herabgesetzt. Die Entmischung des Copolymers aus der Polymerlösung führt dadurch zu der gewünschten Porenbildung an der inneren Grenzfläche. Die Flüssigkeitssäule kann vorzugsweise auch zusätzlich wenigstens einen Porenbildner enthalten, insbesondere Polyethylenglykol (PEG). Dieser kann die Porenbildung an der inneren Oberfläche des Hohlfadens unterstützen.

In der Polymerlösung wird vorteilhafterweise zusätzlich wenigstens ein Metallsalz gelöst, wobei einer der Polymerblöcke Komplexe mit dem Metall bildet, wobei das Metall vorzugsweise ein Hauptgruppenelement der zweiten Hauptgruppe insbesondere Magnesium Calcium oder Strontium ist, wobei das Salz insbesondere vorteilhafterweise Magnesiumacetat oder ein anderes organisches Salz von Magnesium, Calcium oder Strontium ist. Die Metalle der zweiten Hauptgruppe sind biologisch verträglicher als Übergangsmetalle, so dass sie für Hohlfadenmembranen mit biologischen Anwendungen bevorzugt sind. Insbesondere Magnesium und Kalzium kommen in vergleichsweise großen Mengen im menschlichen Körper vor. Auch Strontium kommt in geringen Mengen im Körper vor und ist nicht toxisch.

Die unterstützende Wirkung des Salzes bei der Phasenseparation wird darauf zurückgeführt, dass das hinzugefügte Salz dazu führt, dass sich teilweise geladene polyelektrolytische Mizellenkerne bilden, die die nichtlösungsmittel-induzierte Phasenseparation positiv beeinflussen.

Alternativ oder zusätzlich ist vorteilhafterweise vorgesehen, dass in der Polymerlösung zusätzlich wenigstens ein Kohlenhydrat gelöst wird, insbesondere Saccharose, D(+)-Glucose, D(-)-Fructose und/oder Cyclodextrin, insbesondere α-Cyclodextrin. Diese Stoffe sind biologisch verträglicher als die Übergangsmetalle und deren Salze. Bei Anwendung im erfindungsgemäßen Verfahren zeigen die Kohlenhydrate eine deutliche Stabilisierung der isoporösen trennaktiven Oberfläche bei der Phaseninversion durch Eintauchen in ein Fällbad.

Die unterstützende Wirkung der Kohlenhydrate bei der Phasenseparation wird darauf zurückgeführt, dass die Kohlenhydrate Wasserstoffbrückenbindungen zum hydrophilen Block der Blockcopolymere ausbilden können. Durch die Wasserstoffbrücken wird die Viskosität der Polymerlösung stark erhöht, so dass eine geringere Konzentration der Blockcopolymere in der Lösung ausreicht, um die erfindungsgemäße Struktur mit der isoporösen trennaktiven Schicht auszubilden.

Bei beiden Arten von Zusätzen, also Metallsalzen oder Kohlenhydraten, erfolgt somit eine moderate thermoreversible Verknüpfung einer Blocksorte in der Polymerlösung, insbesondere der porenbildenden Komponente, etwa durch Wasserstoffbrücken oder Komplexbildung.

Durch den Einsatz von Kohlenhydraten zur Verbesserung der Membranstruktur entfällt auch die Problematik einer dauerhaften nachträglichen Abgabe von giftigen Metallionen durch die Membran bei deren Anwendung. Da Kohlenhydrate ungiftig sind, ist der Einsatz der Membran für medizinisch bzw. biologisch relevante Prozesse unbedenklich.

Aufgrund der erhöhten Viskosität wird es hierdurch auch möglich, mit niedrigeren Blockcopolymerkonzentrationen in der Polymerlösung zu arbeiten, was zu einer Materialersparnis bei den relativ teuren Blockcopolymeren führt. Die Reinigung der mit Kohlenhydraten hergestellten Membran ist unproblematisch.

Sowohl die Membranen, die mit Metallsalzen hergestellt sind, als auch diejenigen, die mit Kohlenhydraten hergestellt sind, zeigen in einigen Fällen einstellbare Porengrößen. So kann über eine Veränderung des pH-Werts einer durch die Poren strömenden Lösung der Wasserfluss durch die Membran in einem weiten Bereich eingestellt werden. Die Steuerung über den pH-Wert gelingt, wenn der porenbildende Polymerblock auf Änderungen des pH-Werts reagiert, sich beispielsweise ausdehnt oder zusammenzieht und so die Poren verengt oder erweitert.

Vorzugsweise umfasst das wenigstens eine Blockcopolymer zwei oder mehr untereinander verschiedene Polymerblöcke A, B oder A, B und C oder A, B, C und D der Konfiguration A-B, A-B-A, A-B-C, AB-C-B-A, A-B-C-D, A-B-C-D-C-B-A oder Multiblockcopolymere basierend auf den vorgenannten Konfigurationen, wobei die Polymerblöcke jeweils aus der Gruppe von Polystyrol, Poly-4-vinylpyridin, Poly-2-vinylpyridin, Polybutadien, Polyisopren, Poly(ethylen-statbutylen), Poly(ethylen-alt-propylen), Polysiloxan, Polyalkylenoxid, Poly-ε-caprolacton, Polylactid, Polyalkylmethacrylat, Polymethacrylsäure, Polyalkylacrylat, Polyacrylsäure, Polyhydroxyethylmethacrylat, Polyacrylamid, Poly-N-alkylacrylamid, Polysulfon, Polyanilin, Polypyrrol, Polytriazol, Polyvinylimidazol, Polytetrazol, Polyethylendiamin, Polyvinylalkohol, Polyvinylpyrrolidon, Polyoxadiazol, Polyvinylsulfonsäure, Polyvinylphosphonsäure oder Polymere mit quaternären Ammoniumgruppen ausgewählt sind. Multiblockcopolymere umfassen sich mehrfach wiederholende Strukturen der Grundkonfigurationen. So weist ein auf der Konfiguration A-B basierendes Multiblockcopolymer eine Struktur A-B-A-B-usw. auf, oder ein auf der Konfiguration A-B-C basierendes Multiblockcopolymer die Struktur A-B-C-A-B-C-usw. Auch die Multiblockcopolymere bilden die der Erfindung zugrunde liegenden Mikrophasen aus.

Die Blockcopolymere und die Polymerblöcke weisen eine geringe Polydispersität von weniger als 1,5 auf, insbesondere weniger als 1,2. Damit werden die Selbstorganisation der Blockcopolymere und die Mikrophasenbildung unterstützt.

Erfindungsgemäß sind die Polymerlängen der wenigstens zwei Polymerblöcke des amphiphilen Blockcopolymers relativ zueinander so gewählt, dass eine Selbstorganisation im Lösungsmittel zur Bildung einer sphärischen, zylindrischen oder cokontinuierlichen, insbesondere gyroidalen, Mizellenstruktur oder Mikrophasenstruktur im Lösungsmittel führt, mit einem Längenverhältnis zwischen etwa 2:1 und etwa 10:1, insbesondere zwischen etwa 3:1 und 6:1. Diese Längenverhältnisse der Majoritätskomponente zur Minoritätskomponente der Blockcopolymere führen zu der gewünschten Mizellenstruktur, also dem Einschluss von einzelnen sphärischen Mizellen der Minoritätskomponente im Bulk der Majoritätskomponente, oder zu zylindrischen oder cokontinuierlichen, beispielsweise gyroidalen, Mizellenstrukturen, bei denen die Minoritätskomponenten die Zylinder bzw. gyroidalen Filamente bzw. Verästelungen im Bulk der Majoritätskomponente bilden.

Vorzugsweise weist das Blockcopolymer ein Molekulargewicht zwischen 100 kDa und 600 kDa, insbesondere zwischen 170 kDa und 320 kDa, auf. In diesem Bereich ist die Porengröße besonders fein einstellbar durch Auswahl des Molekulargewichts.

Das Polymer macht vorzugsweise einen Gewichtsanteil zwischen 10 Gew.-% und 40 Gew.-%, insbesondere zwischen 15 Gew.-% und 25 Gew.-%, der Lösung aus.

Bei dem dry/wet-Spinning-Prozess wird besonders vorteilhafterweise die Polymerlösung mit einem Überdruck von zwischen 0,05 und 0,25 bar durch die Spinndüse gepresst. Damit lässt sich eine sehr regelmäßige Hohlfaden-Membran herstellen, wobei der erforderliche Überdruck unter anderem von der Viskosität der Polymerlösung abhängt. Auch die Geometrie, also insbesondere Radius, Spaltbreite und Form, der Spinndüse spielt eine Rolle, so dass für ein gewähltes System der Überdruck bzw. der Durchsatz durch Testreihen sicher und einfach ermittelbar ist.

Die erfindungsgemäß zu verwendende Hohlkerndüse oder Mehrfachhohlkerndüse hat im einfachsten Fall eine ringschlitzförmige äußere Düsenöffnung, die, insbesondere konzentrisch, um eine zentrale Düsenöffnung herum angeordnet ist. Auch andere Hohlfaserquerschnitte können durch geeignete Geometrien der Hohlkerndüse oder Mehrfachhohlkerndüse erzeugt werden, beispielsweise elliptische, polygonale, sternförmige mit 3 oder mehr Strahlen unter anderem. Mit drei- oder mehrschichtigen Mehrfachhohlkerndüsen ist es auch möglich, beispielsweise Träger und Membran und gegebenenfalls noch weitere Schichten cozuextrudieren. Solche Trägerschichten sind an der Außenseite und/oder der Innenseite der erfindungsgemäßen Schicht anzuordnen.

Die Fallstrecke weist vorzugsweise eine Länge von zwischen 10 cm und 100 cm auf. Je nach eingestelltem Überdruck bzw. Durchsatz und eingestellter Spinnrate bedeutet dies, dass eine Abdampfzeit vor dem Eintauchen in das Fällbad von zwischen 10 Sekunden und 60 Sekunden vorteilhafterweise vorliegt. Die Fallstrecke ist ebenfalls durch Testreihen sicher optimal ermittelbar.

Vorzugsweise werden mehrere Lösungsmittel verwendet, wobei die Polymerblöcke des Blockcopolymers in den unterschiedlichen Lösungsmitteln unterschiedlich gut löslich sind und die Lösungsmittel unterschiedlich flüchtig sind. Die Verwendung verschiedener Lösungsmittel, die insbesondere für die verschiedenen Blöcke der Blockcopolymere unterschiedlich gute Lösungsmittel darstellen, unterstützen die Verfestigung der Selbstorganisation und Mikrophasenbildung an der Außenoberfläche des Hohlfadens vor dem Eintauchen in das Fällbad.

Vorteilhafterweise wird als Fällmittel in der Flüssigkeitssäule und in dem Fällbad nach der Fallstrecke unabhängig voneinander jeweils ein polares oder ein unpolares Fällmittel oder Fällmittelgemisch verwendet, insbesondere Wasser und/oder Methanol und/oder Ethanol und/oder Aceton und/oder eine Mischung aus zwei oder mehr der Fällmittel oder Diethylether, und als Lösungsmittel in der Polymerlösung und in der Flüssigkeitssäule unabhängig voneinander jeweils ein polares oder ein unpolares Lösungsmittel, insbesondere Dimethylformamid und/oder Dimethylacetamid und/oder N-Methylpyrrolidon und/oder Dimethylsulfoxid und/oder Tetrahydrofuran oder eine Mischung aus zwei oder mehr der Lösungsmittel, wobei das oder die Lösungsmittel in der Flüssigkeitssäule mit dem oder den Fällmitteln in der Flüssigkeitssäule mischbar sind.

Die im jeweiligen Fällmittel oder Fällmittelgemisch sowie dem jeweiligen Lösungsmittel oder Lösungsmittelgemisch verwendeten Fällmittel bzw. Lösungsmittel sind ebenfalls jeweils untereinander mischbar, so dass das jeweils verwendete Fällmittelgemisch bzw. Lösungsmittelgemisch einphasig ist, also homogen. Diethylether ist ein Beispiel für ein wasserunlösliches Fällmittel. Für einige Polymere eignen sich nichtwässrige Lösungsmittel und Fällmittel besser als wässrige Lösungsmittel und Fällmittel.

Die der Erfindung zugrunde liegende Aufgabe wird auch durch eine integral-asymmetrische Hohlfaden-Polymermembran gelöst, insbesondere Mikro-, Ultra- oder Nanofiltrationsmembran, hergestellt oder herstellbar in einem wie vorstehend beschriebenen erfindungsgemäßen dry/wet-Spinning-Verfahren, wobei die Hohlfaden-Polymermembran eine isoporöse trennaktive Außenoberfläche aufweist, die auf einer Mikrophasenbildung durch Selbstorganisation eines amphiphilen Copolymers beruht, die in eine in einer nichtlösungsmittelinduzierten Phaseninversion gebildete schwammartige Binnenstruktur übergeht, wobei eine innere Oberfläche der Hohlfaden-Polymermembran aufgrund einer Ausfällung mit einer inneren Flüssigkeitssäule aus einem Fällmittel mit herabgesetzter Fällaktivität porös ausgebildet ist.

Erfindungsgemäß weisen die Poren der trennaktiven Außenoberfläche ein Verhältnis der maximalen Porendurchmesser zu den minimalen Porendurchmessern von weniger als 3 auf.

Die der Erfindung zugrunde liegende Aufgabe wird auch durch ein Filtrationsmodul, insbesondere Mikrofiltrationsmodul, Ultrafiltrationsmodul oder Nanofiltrationsmodul, mit wenigstens einer erfindungsgemäßen, zuvor beschriebenen Hohlfaden-Polymermembran gelöst, ebenso wie durch eine Verwendung einer entsprechenden, erfindungsgemäßen integral-asymmetrischen Hohlfaden-Polymermembran zur Mikrofiltration, Ultrafiltration oder Nanofiltration, insbesondere zur Aufreinigung von Proteinen oder anderen nanopartikulären Stoffen.

Die zu den einzelnen Erfindungsgegenständen, also dem Verfahren, der integral-asymmetrischen Hohlfaden-Polymermembran, dem Filtrationsmodul und der Verwendung genannten Vorteile, Eigenschaften und Merkmale gelten ohne Einschränkung auch für die jeweils anderen Erfindungsgegenstände, die sich aufeinander beziehen.

Weitere Merkmale der Erfindung werden aus der Beschreibung erfindungsgemäßer Ausführungsformen zusammen mit den Ansprüchen und den beigefügten Zeichnungen ersichtlich.

Die Erfindung wird nachstehend ohne Beschränkung des allgemeinen Erfindungsgedankens anhand von Ausführungsbeispielen unter Bezugnahme auf die Zeichnungen und Figuren beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Hohlfaden-Membran-Spinnsystems,
- Fig. 2a), b): SEM-Aufnahmen von Querschnitten durch eine erfindungsgemäß hergestellte Hohlfaden-Polymermembran in zwei verschiedenen Vergrößerungsstufen,
- Fig. 3a), b): SEM-Aufnahmen der Außenoberfläche einer erfindungsgemäß hergestellten Hohlfaden-Polymermembran in zwei verschiedenen Vergrößerungsstufen,
- Fig. 4a), b): SEM-Aufnahmen der Innenoberfläche einer erfindungsgemäß hergestellten Hohlfaden-Polymermembran in zwei verschiedenen Vergrößerungsstufen und
- Fig. 5a)-c): SEM-Aufnahmen von Querschnitt, Außenoberfläche und Innenoberfläche einer weiteren erfindungsgemäß hergestellten Hohlfaden-Polymermembran.

Im Folgenden wird anhand von Beispielen dargestellt, wie die erfindungsgemäßen Hohlfaden-Membranen als vollständig selbststützende integral-asymmetrische Membranen hergestellt werden.

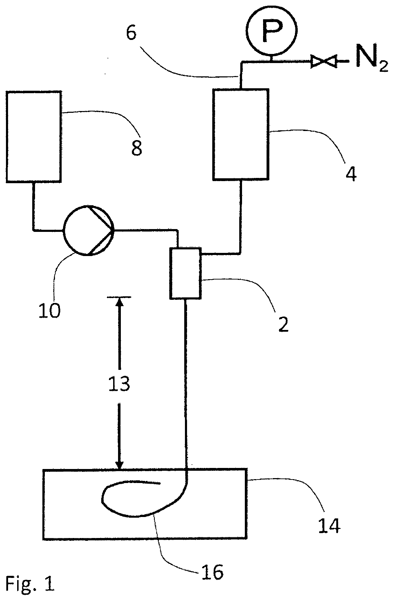

In Fig. 1 ist dazu ein Spinnsystem mit einer als Hohlkerndüse ausgebildeten Spinndüse 2 dargestellt, die eine zentrale Öffnung und eine konzentrisch darum herum angeordnete ringschlitzförmige Düse bzw. Ringdüse aufweist. Durch die Ringdüse tritt eine Polymerlösung mit wenigstens einem amphiphilen Block-Copolymer aus, die in einem Polymerlösungsbehälter 4 bereitgehalten wird. Die Polymerlösung wird mittels eines unter Überdruck P stehenden Gases in die Spinndüse 2 gepresst, im vorliegenden Fall Stickstoff (N₂), das an einem Druckanschluss 6 am Behälter 4 anliegt. Anstelle eines unter Überdruck stehenden Gases kann alternativ auch eine Pumpe eingesetzt werden, die den Durchsatz der Polymerlösung durch die Spinndüse 2 steuert.

Durch die zentrale Öffnung bzw. Düse der Spinndüse 2 tritt eine flüssige Fällmittellösung aus einem Fällmittelbehälter 8 aus. Dadurch wird eine zentrale Flüssigkeitssäule gesponnen. Das in der zentralen Öffnung des gesponnenen Hohlfadens 12 eingeführte Fällmittel wird durch eine Pumpe 10 eingeführt.

Aus der Spinndüse 2 tritt somit ein Hohlfaden 12 aus, dessen innere Öffnung bzw. Lumen mit einer Flüssigkeitssäule aus dem Fällmittel aus dem Behälter 8 gefüllt ist, das eine Ausfällung des Polymers von innen her bewirkt. Der Hohlfaden 12 taucht nach einer Fallstrecke 13 in ein Fällbad 14 mit einem weiteren Fällmittel, beispielsweise Wasser, ein. Dort findet von der Außenseite her ein flüssigkeitsinduzierter Phaseninversionsprozess statt und es entsteht die erfindungsgemäße Hohlfaden-Polymermembran 16 aus dem Hohlfaden 12.

Verfahrensparameter sind dabei unter anderem die Wahl der Spinndüse 2 bzw. Ringschlitzdüse, der Polymerlösung, der Flüssigkeitssäule, des Überdrucks P bzw. des Durchsatzes an Polymerlösung, der Fallstrecke 13, des Fällmittels im Fällbad 14, der verschiedenen Konzentrationen oder der lokalen Scherrate im Spinndüsenspalt. Die Parameter werden so gewählt, dass ein mechanisch stabiler Hohlfaden 12 entsteht, sobald dieser die Spinndüse 2 in Richtung Fällbad 14 verlässt und eine Ausbildung einer dichten Haut an der Innenseite des Hohlfadens 12 vermieden wird.

Thermodynamisch finden kurz hintereinander mehrere Prozesse statt. An der Innenseite findet zunächst ein verlangsamter flüssigkeitsinduzierter Phaseninversionsprozess ohne Trockenphase statt. Aufgrund der herabgesetzten Fällaktivität des inneren Fällmittels entstehen hierbei unregelmäßige und große Poren. Zwischen der Spinndüse 2 und dem Fällbad 14 erfolgt durch Abdampfen eines Lösungsmittels die Ausbildung der zylinderförmigen Porenstrukturen an der Außenseite. Da der Hohlfaden 12 nach unten gesponnen wird, wirkt außerdem auch noch die Schwerkraft auf die Strukturbildung. Nach dem Eintauchen des Hohlfadens 12 in das Fällbad 14 tritt ein zweiter flüssigkeitsinduzierter Phaseninversionsprozess an der Außenoberfläche des Hohlfadens 12 auf, die zur endgültigen Formung der Hohlfaden-Polymermembran 16 führt.

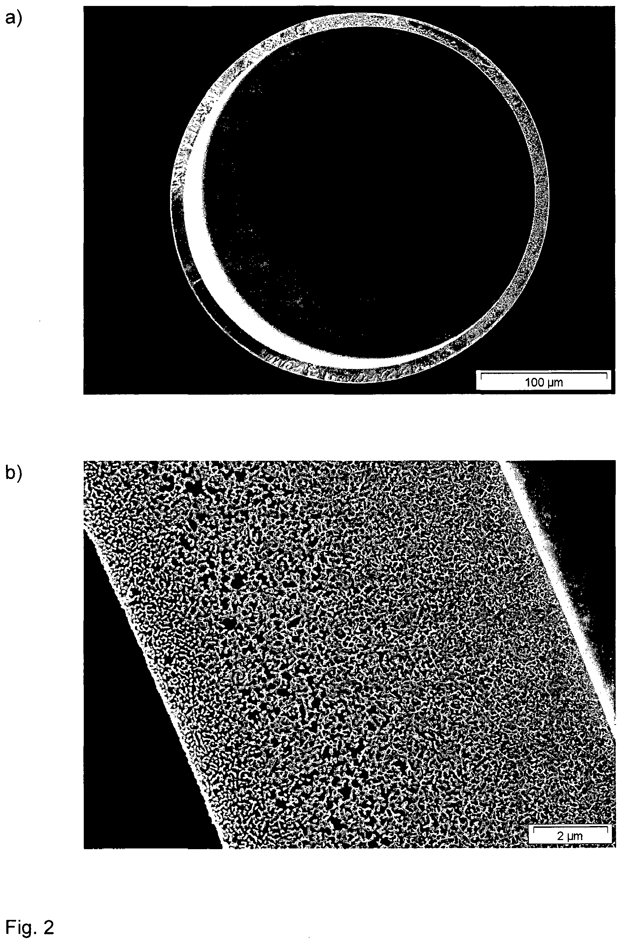

Die Rasterelektrodenmikroskop-Bilder (scanning electron microscope, SEM) der Figuren 2 bis 5 zeigen eine relativ enge Porengrößenverteilung auf der Außenhaut, die durch die Mikrophasenseparation und den Lösemittel-Fällmittelaustausch verursacht ist. Die Innenhaut zeigt dagegen elliptische Porenstrukturen, die aufgrund der verlangsamten Phaseninversion an der Innenseite des Hohlfadens 12 entstanden sind und aufgrund der Scherung im Spalt parallel zur Spinnrichtung ausgerichtet sind. Hier treten in bestimmten Fällen deutliche Hohlräume auf, die eine Porosität erzeugen, die zur Filterung gebraucht wird.

Es wurde befunden, dass reines Wasser als Kernflüssigkeit nicht geeignet ist. Hingegen sind Wassermischungen mit den Lösemitteln der Blockcopolymerlösung günstig für eine entsprechende grobporige Innenhaut.

Im Folgenden werden erfindungsgemäße Beispiele beschrieben.

### Herstellung einer Polymerlösung

Zur Herstellung einer Polymerlösung mit verschiedenen Konzentrationen und Lösungsmittelmischungen wurde ein Polystyrol-Block-Poly(4-Vinylpyridin) Blockcopolymer (PS-*b*-P4VP) in einer Mischung aus N,N-Dimethylformamid (DMF) und Tetrahydrofuran (THF) bei Raumtemperatur einen Tag lang unter ständigem Rühren mit einem magnetischen Rührer gelöst, bis die Polymerlösung homogen wurde.

Vor dem Spinnen des Hohlfadens wurde die Polymerlösung bei Raumtemperatur ohne Rühren 12 Stunden lang gelagert, um den Schereffekt des Rührens und feine Luftblasen, die in der Lösung gefangen waren, zu entfernen.

Als Polymer wurde ein Copolymer PS-*b*-P4VP mit einem Gesamtmolekulargewicht von 154 kg/Mol (kDa) verwendet, wobei hiervon 82,7 Gew.-% auf Polystyrol und 17,3 Gew.-% auf P4VP entfielen. Die Lösung enthielt 27 Gew.-% Polymer und 73 Gew.-% Lösemittel DMF und THF im Verhältnis 60:40 Gew.-% DMF:THF.

### Spinnen der integral-asymmetrischen Hohlfaden-Membran

PS-*b*-P4VP Hohlfaden-Membranen wurden in einem dry/wet-Spinning-Verfahren bei verschiedenen Fallhöhen gesponnen. Die Fallhöhen betrugen 30, 50, 70 und 90 cm. Das experimentelle System ist in Fig. 1 gezeigt.

Die Spinndüse hat eine Struktur mit einer einzelnen Öffnung in der Öffnung in einer konzentrischen Anordnung mit einem Durchmesser von 0,212 mm für die innere Flüssigkeitssäule. Der Innendurchmesser der Ringdüse beträgt 0,353 mm und der Außendurchmesser 0,702 mm, die Düsenlänge beträgt 1 mm.

Die Polymerlösung wurde durch die Öffnung der Spinndüse bzw. Ringdüse unter Verwendung von Stickstoff unter einem Überdruck herausgepresst. Die Extrusionsrate der Polymerlösung wurde durch den Druck des Stickstoffgases zwischen 0,05 und 1 bar eingestellt. Die Polymerlösung floss durch die Ringdüse bzw. Hohlkerndüse, während als Flüssigkeitssäule ein Gemisch aus Wasser und verschiedenen wasserlöslichen Lösungsmitteln als internes Fällmittel durch die innere Öffnung der Spinndüse unter kontrollierten Flussraten geleitet wurde.

Die entstehenden Hohlfäden kamen aus der Spitze der Spinndüse und durchliefen eine Fallstrecke einer bestimmten Länge, bevor sie in ein Fällbad mit reinem Wasser eintauchten.

Die Variation in der Fallstrecke zwischen der Spinndüse und dem Fällbad diente dazu, Lösungsmittels aus der Polymerlösung im äußeren Bereich der Hohlfaden-Membran verdampfen zu lassen. Anschließend gelangten die Hohlfaden-Membranen in das Fällbad mit ihrer Fallgeschwindigkeit, ohne extern mit einer Zugkraft beaufschlagt zu sein.

Sowohl die internen als auch die externen Fällmittel wurden bei Raumtemperatur gehalten.

Anschließend wurden die Hohlfaden-Polymermembranen im Wasserbehälter 24 Stunden lang bei Raumtemperatur gehalten, um residuales Lösungsmittel (DMF) zu entfernen, und anschließend in einem Vakuumofen bei 60 °Celsius für mehr als 24 Stunden lang getrocknet.

Parameter einiger Versuchsanordnungen sind in der folgenden Tabelle gezeigt:

| | | | | | |
|---|---|---|---|---|---|
| Fallstrecke | 90 cm | | | | |
| Fluss der Säule | 0,5 ml/Min | | | | |
| Druck P (bar) | 0,2 | 0,1 | 0,05 | 0,2 | 0,1 |
| Flüssigkeitssäule | Wasser/ DMF | Wasser/ THF | Wasser/ THF | Wasser/Mix (DMF/THF) | Wasser/Mix (DMF/THF) |
| Mischungsverhältnis | 80/20 | 80/20 | 80/20 | 80/20 (60/40) | 60/40 (60/40) |

In diesen Fällen wurde eine erfindungsgemäße Hohlfadenmembran mit isoporöser Außenhaut und poröser Innenhaut erhalten. Beispiele hiervon werden im Folgenden gezeigt.

### SEM-Aufnahmen

In den folgenden Figuren sind aus dem Elektrodenmikroskop Aufnahmen von Resultaten von zwei Versuchen gezeigt, die in der obenstehenden Tabelle aufgelistet sind. Es handelt sich um die beiden Experimente, bei denen die Flüssigkeitssäule ein Gemisch aus Wasser und THF im Gewichtsverhältnis von 80 Gew.-% zu 20 Gew.-% aufwies. Die Fallstrecke betrug 90 cm, die Flussrate der Flüssigkeitssäule 0,5 ml/Min.

Es zeigt sich dabei, dass eine niedrigere Scherrate in der Spinndüse zu einer regelmäßigeren Struktur der Poren an der Außenoberfläche der Hohlfaden-Membran führen.

In Fig. 2a) und 2b) ist für einen Überdruck von 0,1 bar der Querschnitt durch die Hohlfaden-Membran in zwei verschiedenen Vergrößerungen gezeigt. Deutlich erkennbar ist insbesondere die schwammartige Struktur im Inneren der Hohlfaden-Membran.

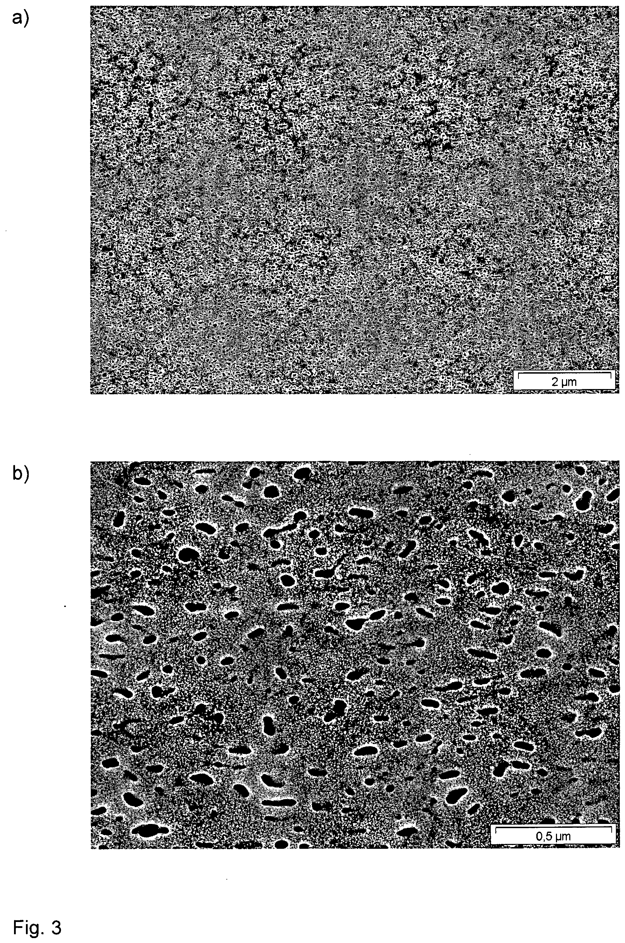

In Fig. 3a) und 3b) ist die Außenoberfläche derselben Membran wie in Fig. 2 in zwei verschiedenen Vergrößerungsstufen gezeigt. Es ergibt sich insbesondere bei der großen Vergrößerung eine Porenstruktur mit Poren, deren Größe sehr einheitlich ist. Diese Struktur ist über einen großen Bereich der Außenoberfläche anzutreffen.

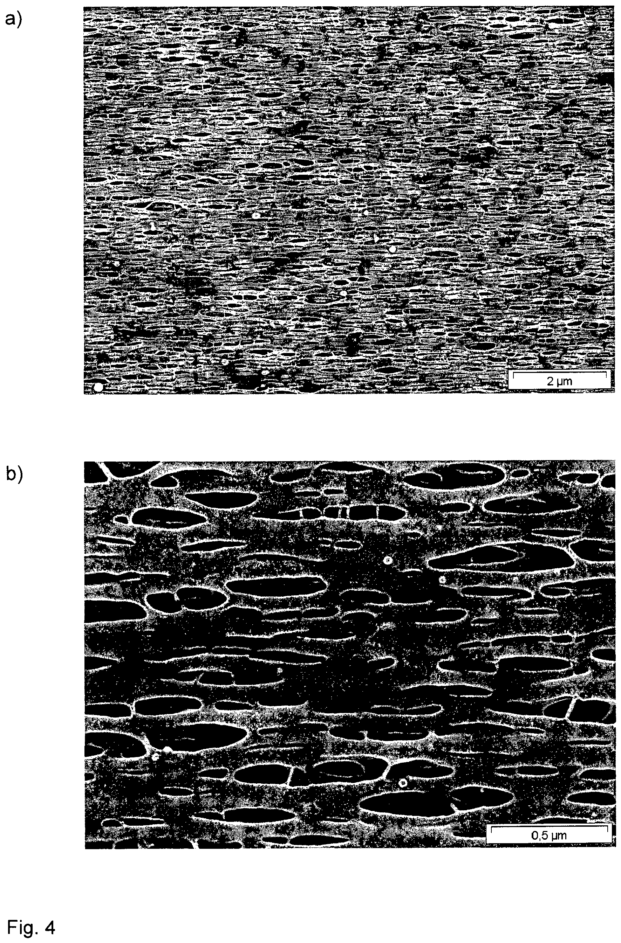

In Fig. 4a) und 4b) sind in zwei verschiedenen Vergrößerungsstufen Aufnahmen der inneren Oberfläche der Hohlfadenmembran aus Fig. 2 und 3 gezeigt, wobei sich die unregelmäßige Porenstruktur durch die Scherung in der Spinndüse als in Spinnrichtung elongiert zeigt. Diese unregelmäßige Porenstruktur hat keine trennaktive Wirkung, ist allerdings notwendig, damit die entsprechende Membran überhaupt zur Filterung einsetzbar ist.

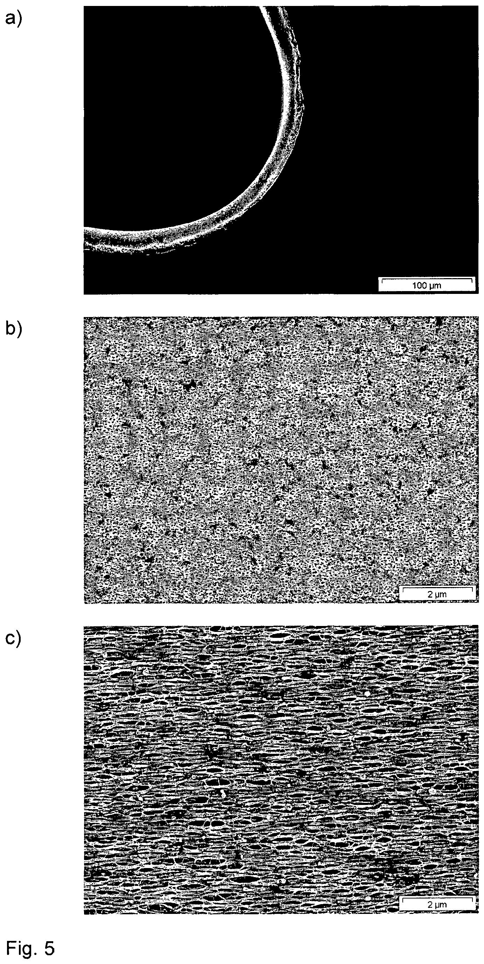

In Fig. 5 ist schließlich für einen Fall, bei dem eine Hohlfaden-Membran mit einem Überdruck von 0,05 bar extrudiert wurde, der Querschnitt, die Außenoberfläche und die Innenoberfläche in jeweils größerem Maßstab gezeigt, wobei auch hier die erfindungsgemäßen Strukturen eine im Wesentlichen isoporösen Außenoberfläche und einer porösen Innenoberfläche sowie eine schwammartige Struktur dazwischen auftritt.

### Bezugszeichen

- 2: Spinndüse
- 4: Behälter für Polymerlösung
- 6: Druckanschluss
- 8: Behälter für innere Fällmittellösung
- 10: Pumpe
- 12: Hohlfaden
- 13: Fallstrecke
- 14: Fällbad
- 16: Hohlfaden-Polymermembran

## Patentansprüche

1. Verfahren zur Herstellung einer selbststützenden integral-asymmetrischen Hohlfaden-Polymermembran (16) mit isoporöser Außenhaut, bei der die Poren der trennaktiven Außenoberhaut ein Verhältnis der maximalen Porendurchmesser zu den minimalen Porendurchmessern von weniger als 3 aufweisen, poröser Innenhaut und schwammartiger Innenstruktur in einem dry/wet-Spinning-Verfahren, mit den folgenden Verfahrensschritten:
- Herstellen einer Polymerlösung mit wenigstens einem Lösungsmittel, in dem wenigstens ein amphiphiles Blockcopolymer mit wenigstens zwei verschiedenen Polymerblöcken gelöst wird, wobei die Blockcopolymere und die Polymerblöcke eine geringe Polydispersität von weniger als 1,5 aufweisen und die Polymerlängen der wenigstens zwei Polymerblöcke des amphiphilen Blockcopolymers relativ zueinander so gewählt sind, dass eine Selbstorganisation im Lösungsmittel zur Bildung einer sphärischen, zylindrischen oder cokontinuierlichen, insbesondere gyroidalen, Mizellenstruktur oder Mikrophasenstruktur im Lösungsmittel führt, mit einem Längenverhältnis zwischen etwa 2:1 und etwa 10:1,
- Pressen der Polymerlösung mit einem Überdruck von 0,01 bis 0,5 bar durch eine als Hohlkerndüse oder Mehrfachhohlkerndüse ausgebildete Spinndüse (2) zur Formung eines Hohlfadens (12), in dessen Mitte eine Flüssigkeitssäule gesponnen wird, die aus einem Fällmittel mit herabgesetzter Fällaktivität besteht, wobei die Flüssigkeitssäule aus einem Gemisch aus wenigstens einem Fällmittel für das wenigstens eine Blockcopolymer und wenigstens einem mit dem Fällmittel mischbaren Lösungsmittel für das wenigstens eine Blockcopolymer besteht, wobei insbesondere zusätzlich wenigstens ein Porenbildner, insbesondere Polyethylenglykol, in der Flüssigkeitssäule vorhanden ist,
- nach Durchlaufen einer Fallstrecke (13) mit einer Länge von 1 cm bis 100 cm in einer Atmosphäre Eintauchen des gesponnenen Hohlfadens (12) in ein Fällbad (14) zur Formung der Hohlfaden-Polymermembran (16).

2. Verfahren nach Anspruch 1, **dadurch gekennzeichnet, dass** in der Polymerlösung zusätzlich wenigstens ein Metallsalz gelöst wird, wobei einer der Polymerblöcke Komplexe mit dem Metall bildet, wobei das Metall insbesondere ein Hauptgruppenelement der zweiten Hauptgruppe insbesondere Magnesium Calcium oder Strontium ist, wobei das Salz insbesondere Magnesiumacetat oder ein anderes organisches Salz von Magnesium, Calcium oder Strontium ist.

3. Verfahren nach Anspruch 1 oder 2, **dadurch gekennzeichnet, dass** in der Polymerlösung zusätzlich wenigstens ein Kohlenhydrat gelöst wird, insbesondere Saccharose, D(+)-Glucose, D(-)-Fructose und/oder Cyclodextrin, insbesondere α-Cyclodextrin.

4. Verfahren nach Anspruch 2 oder 3, **dadurch gekennzeichnet, dass** das Metallsalz und/oder das Kohlenhydrat einen Gewichtsanteil zwischen 0,1 Gew.-% und 5 Gew.-%, insbesondere zwischen 0,5 Gew.-% und 2 Gew.-%, der Lösung ausmacht.

5. Verfahren nach einem der Ansprüche 1 bis 4, **dadurch gekennzeichnet, dass** das wenigstens eine Blockcopolymer zwei oder mehr untereinander verschiedene Polymerblöcke A, B oder A, B und C oder A, B, C und D der Konfiguration A-B, A-B-A, A-B-C, A-B-C-B-A, A-B-C-D, A-B-C-D-C-B-A oder Multiblockcopolymere basierend auf den vorgenannten Konfigurationen umfasst, wobei die Polymerblöcke jeweils aus der Gruppe von Polystyrol, Poly-4-vinylpyridin, Poly-2-vinylpyridin, Polybutadien, Polyisopren, Poly(ethylen-stat-butylen), Poly(ethylen-alt-propylen), Polysiloxan, Polyalkylenoxid, Poly-ε-caprolacton, Polylactid, Polyalkylmethacrylat, Polymethacrylsäure, Polyalkylacrylat, Polyacrylsäure, Polyhydroxyethylmethacrylat, Polyacrylamid, Poly-N-alkylacrylamid, Polysulfon, Polyanilin, Polypyrrol, Polytriazol, Polyvinylimidazol, Polytetrazol, Polyethylendiamin, Polyvinylalkohol, Polyvinylpyrrolidon, Polyoxadiazol, Polyvinylsulfonsäure, Polyvinylphosphonsäure oder Polymere mit quaternären Ammoniumgruppen ausgewählt sind.

6. Verfahren nach einem der Ansprüche 1 bis 5, **dadurch gekennzeichnet, dass** die Blockcopolymere und die Polymerblöcke eine Polydispersität von weniger als 1,2 aufweisen.

7. Verfahren nach einem der Ansprüche 1 bis 6, **dadurch gekennzeichnet, dass** die Polymerlängen der wenigstens zwei Polymerblöcke des amphiphilen Blockcopolymers relativ zueinander ein Längenverhältnis zwischen etwa 3:1 und 6:1 aufweisen.

8. Verfahren nach einem der Ansprüche 1 bis 7, **dadurch gekennzeichnet, dass** das Blockcopolymer ein Molekulargewicht zwischen 100 kDa und 600 kDa, insbesondere zwischen 170 kDa und 320 kDa, aufweist und/oder das Polymer einen Gewichtsanteil zwischen 10 Gew.-% und 40 Gew.-%, insbesondere zwischen 15 Gew.-% und 25 Gew.-%, der Lösung ausmacht.

9. Verfahren nach einem der Ansprüche 1 bis 8, **dadurch gekennzeichnet, dass** die Polymerlösung mit einem Überdruck von zwischen 0,05 und 0,25 bar durch die Spinndüse gepresst wird und/oder die Fallstrecke (13) eine Länge von zwischen 10 cm und 100 cm aufweist.

10. Verfahren nach einem der Ansprüche 1 bis 9, **dadurch gekennzeichnet, dass** mehrere Lösungsmittel verwendet werden, wobei die Polymerblöcke des Blockcopolymers in den unterschiedlichen Lösungsmitteln unterschiedlich gut löslich sind und die Lösungsmittel unterschiedlich flüchtig sind.

11. Verfahren nach einem der Ansprüche 1 bis 10, **dadurch gekennzeichnet, dass** als Fällmittel in der Flüssigkeitssäule und in dem Fällbad (14) nach der Fallstrecke (13) unabhängig voneinander jeweils ein polares oder ein unpolares Fällmittel oder Fällmittelgemisch verwendet wird, insbesondere Wasser und/oder Methanol und/oder Ethanol und/oder Aceton und/oder eine Mischung aus zwei oder mehr der Fällmittel oder Diethylether, und als Lösungsmittel in der Polymerlösung und in der Flüssigkeitssäule unabhängig voneinander jeweils ein polares oder ein unpolares Lösungsmittel, insbesondere Dimethylformamid und/oder Dimethylacetamid und/oder N-Methylpyrrolidon und/oder Dimethylsulfoxid und/oder Tetrahydrofuran oder eine Mischung aus zwei oder mehr der Lösungsmittel, wobei das oder die Lösungsmittel in der Flüssigkeitssäule mit dem oder den Fällmitteln in der Flüssigkeitssäule mischbar sind.

12. Integral-asymmetrische Hohlfaden-Polymermembran (16), insbesondere Mikro-, Ultra- oder Nanofiltrationsmembran, herstellbar in einem dry/wet-Spinning-Verfahren nach einem der Ansprüche 1 bis 11, wobei die Hohlfaden-Polymermembran (16) eine isoporöse trennaktive Außenoberfläche aufweist, die auf einer Mikrophasenbildung durch Selbstorganisation eines amphiphilen Copolymers beruht, die in eine in einer nichtlösungsmittelinduzierten Phaseninversion gebildete schwammartige Binnenstruktur übergeht, wobei eine innere Oberfläche der Hohlfaden-Polymermembran (16) aufgrund einer Ausfällung mit einer inneren Flüssigkeitssäule aus einem Fällmittel mit herabgesetzter Fällaktivität porös ausgebildet ist, wobei die Poren der trennaktiven Außenoberfläche ein Verhältnis der maximalen Porendurchmesser zu den minimalen Porendurchmessern von weniger als 3 aufweisen.

13. Filtrationsmodul, insbesondere Mikrofiltrationsmodul, Ultrafiltrationsmodul oder Nanofiltrationsmodul, mit wenigstens einer Hohlfaden-Polymermembran (16) nach Anspruch 12.

14. Verwendung einer integral-asymmetrischen Hohlfaden-Polymermembran (16) nach Anspruch 12 zur Mikrofiltration, Ultrafiltration oder Nanofiltration, insbesondere zur Aufreinigung von Proteinen oder anderen nanopartikulären Stoffen.

## Claims

1. A method for producing a self-supporting integral-asymmetric hollow fiber polymer membrane (16) with an isoporous outer skin in which the pores of the separation-active outer skin have a maximum pore diameter to minimum pore diameter ratio of less than 3, with a porous inner skin and foam-like inner structure, in a dry/wet spinning method, comprising the following method steps:
- production of a polymer solution with at least one solvent in which at least one amphiphilic block copolymer is dissolved with at least two different polymer blocks, wherein the block copolymers and the polymer blocks have a low polydispersity of less than 1.5, and the polymer lengths of the at least two polymer blocks of the amphiphilic block copolymer relative to each other are selected so that a self-organization in the solvent leads to the formation of a spherical, cylindrical or co-continuous, in particular gyroidal, micellar structure or microphase structure in the solvent with a length ratio between approximately 2:1 and approximately 10:1,
- pressing the polymer solution with an overpressure of 0.01 to 0.5 bar through a spinning nozzle (2) designed as a hollow core nozzle or multiple hollow core nozzle to form a hollow fiber (12), in the middle of which a liquid column is spun that consists of a precipitant with reduced precipitation activity, wherein the liquid column consists of a mixture of at least one precipitant for the at least one block copolymer and at least one solvent that can be mixed with the precipitant for the at least one block copolymer, wherein in particular at least one additional pore former, in particular polyethylene glycol, is present in the liquid column,
- after falling a fall distance (13) with a length of 1 cm to 100 cm in an atmosphere, immersion of the spun hollow fiber (12) in a precipitation bath (14) to form the hollow fiber polymer membrane (16).

2. The method according to claim 1, **characterized in that** at least one metal salt is also dissolved in the polymer solution, wherein one of the polymer blocks forms complexes with the metal, wherein the metal is in particular a main group element of the second main group, in particular magnesium, calcium or strontium, wherein the salt is in particular magnesium acetate or another organic salt of magnesium, calcium or strontium.

3. The method according to claim 1 or 2, **characterized in that** in addition, at least one carbohydrate is dissolved in the polymer solution, in particular saccharose, D(+)-glucose, D(-)-fructose und/oder cyclodextrin, in particular α-cyclodextrin.

4. The method according to claim 2 or 3, **characterized in that** the metal salt and/or the carbohydrate comprises a percent by weight of between 0.1% by weight and 5% by weight, in particular between 0.5% by weight and 2% by weight of the solution.

5. The method according to one of claims 1 or 4, **characterized in that** the at least one block copolymer comprises two or more different polymer blocks A, B, or A, B and C, or A, B, C and D with the configuration A-B, A-B-A or A-B-C, A-B-C-B-A, A-B-C-D, A-B-C-D-C-B-A or multi-block copolymers based on the aforementioned configurations, wherein each of the polymer blocks are selected from the group of polystyrene, poly-4-vinylpyridine, poly-2-vinylpyridine, polybutadiene, polyisoprene, poly(ethylene-stat-butylene), poly(ethylene-alt-propylene), polysiloxane, polyalkylene oxide, poly-ε-caprolactone, polylactide, polyalkylmethacrylate, polymethacrylic acid, polyalkylacrylate, polyacrylic acid, polyhydroxyethylmethacrylate, polyacrylamide, poly-N-alkylacrylamide, polysulfone, polyaniline, polypyrrole, polytriazole, polyvinylimidazole, polytetrazole, polyethylendiamine, polyvinyl alcohol, polyvinylpyrrolidone, polyoxadiazole, polyvinylsulfonic acid, polyvinylphosphonic acid or polymers with quaternary ammonium groups.

6. The method according to one of claims 1 to 5, **characterized in that** the block copolymers and the polymer blocks have a polydispersity of less than 1.2.

7. The method according to one of claims 1 to 6, **characterized in that** the polymer lengths of the at least two polymer blocks of the amphiphilic block copolymers have a length ratio relative to each other of between approximately 3:1 and 6:1.

8. The method according to one of claims 1 to 7, **characterized in that** the block copolymer has a molecular weight between 100 kDa and 600 kDa, in particular between 170 kDa and 320 kDa, and/or the polymer has a percent by weight of between 10% by weight and 40% by weight, especially between 15% by weight and 25% by weight of the solution.

9. The method according to one of claims 1 to 8, **characterized in that** the polymer solution is pressed through the spinning nozzle with an overpressure of between 0.05 and 0.25 bar, and/or the fall distance (13) has a length of between 10 cm and 100 cm.

10. The method according to one of claims 1 to 9, **characterized in that** several solvents are used, wherein the polymer blocks of the block copolymer are easily soluble in the different solvents, and the solvents vary in volatility.

11. The method according to one of claims 1 to 10, **characterized in that** a polar or a nonpolar precipitant or precipitant mixture is used as the precipitant in each of the liquid column and the precipitation bath (14) after the fall distance (13) independent of each other, in particular water and/or methanol, and/or ethanol, and/or acetone, and/or a mixture of two or more of the precipitants, or diethyl ether, and a polar or nonpolar solvent is used as a solvent in each of the polymer solution and the liquid column independent of each other, in particular dimethylformamide, and/or dimethylacetamide, and/or N-methylpyrrolidone, and/or dimethylsulfoxide, and/or tetrahydrofurane, or a mixture of two or more of the solvents, wherein the solvent or solvents in the liquid column are miscible with the precipitant or precipitants in the liquid column.

12. An integral-asymmetric hollow fiber polymer membrane (16), in particular a micro-, ultra- or nanofiltration membrane, producible in a dry/wet spinning method according to one of claims 1 to 11, wherein the hollow fiber polymer membrane (16) has an isoporous separation-active outer surface that is based on microphase formation from the self-organization of an amphiphilic copolymer, that transitions into a foam-like inner structure formed in a non-solvent induced phase inversion, wherein an inner surface of the hollow fiber polymer membrane (16) is formed porous due to precipitation with an inner liquid column consisting of a precipitant with a reduced precipitation activity, wherein the pores of the separation-active outer surface have a maximum pore diameter to minimum pore diameter ratio of less than 3.

13. A filtration module, especially a microfiltration module, ultrafiltration module or nanofiltration module, with at least one hollow fiber polymer membrane (16) according to claim 12.

14. A use of an integral-asymmetric hollow fiber polymer membrane (16) according to claim 12 for micro filtration, ultrafiltration or nanofiltration, in particular for purifying proteins or other nanoparticle materials.

## Revendications

1. Procédé pour produire une membrane polymère à fibre creuse asymétrique intégrale (16), autoporteuse, ayant une peau extérieure isoporeuse, les pores de la peau extérieure de séparation active présentant un rapport entre le diamètre de pores maximal et le diamètre de pores minimal au moins inférieur à 3, une peau intérieure poreuse et une structure interne spongieuse dans un procédé de filage à sec/humide, comportant les étapes suivantes consistant à :
- préparer une solution de polymères ayant au moins un solvant, au moins un copolymère séquencé amphiphile ayant au moins deux blocs polymères différents est dissous, les copolymères séquencés et les blocs polymères ayant une faible polydispersité inférieure à 1,5 et les longueurs de polymères desdits au moins deux blocs polymères du copolymère séquencé amphiphile étant choisies l'une par rapport à l'autre de sorte qu'une auto-organisation dans le solvant conduit à la formation dans le solvant d'une structure micellaire ou d'une structure à microphases sphérique, cylindrique ou co-continue, en particulier gyroïde, avec un rapport de longueur compris entre environ 2:1 et environ 10:1,
- presser la solution de polymères en appliquant une surpression de 0,01 à 0,5 bar à travers une filière (2) conçue sous la forme d'une buse à noyau creux ou d'une buse à noyaux creux multiples afin de former une fibre creuse (12) au centre duquel est filée une colonne de liquide constituée d'un précipitant ayant une activité réduite en termes de précipitation, la colonne de liquide étant constituée d'un mélange d'au moins un précipitant pour ledit au moins un copolymère séquencé et d'au moins un solvant miscible avec le précipitant pour ledit au moins un copolymère séquencé, la colonne de liquide contenant de plus en particulier au moins un agent porogène, en particulier du polyéthylène glycol,
- après passage à travers une distance de chute (13) ayant une longueur allant de 1 cm à 100 cm dans une atmosphère, immerger la fibre creuse filée (12) dans un bain de précipitation (14) pour former la membrane polymère à fibre creuse (16).

2. Procédé selon la revendication 1, **caractérisé en ce que**, de plus, au moins un sel de métal est dissous dans la solution de polymères, l'un des blocs polymères formant des complexes avec le métal, le métal étant en particulier un élément de groupe principal du deuxième groupe principal, en particulier du magnésium, du calcium ou du strontium, le sel étant en particulier de l'acétate de magnésium ou un autre sel organique choisi parmi le magnésium, le calcium ou le strontium.

3. Procédé selon la revendication 1 ou la revendication 2, **caractérisé en ce que**, de plus, au moins un hydrate de carbone est dissous dans la solution de polymères, en particulier du saccharose, du D(+)-glucose, du D(-)-fructose et/ou de la cyclodextrine, en particulier de la α-cyclodextrine.

4. Procédé selon la revendication 2 ou la revendication 3, **caractérisé en ce que** le sel de métal et/ou l'hydrate de carbone représente une proportion en poids comprise entre 0,1 % en poids et 5 % en poids, en particulier entre 0,5 % en poids et 2 % en poids, de la solution.

5. Procédé selon l'une des revendications 1 à 4, **caractérisé en ce que** ledit au moins un copolymère séquencé comporte deux, ou plus de deux, blocs polymères différents les uns des autres A, B ou A, B et C ou A, B, C et D de la configuration A-B, A-B-A, A-B-C, A-B-C-B-A, A-B-C-D, A-B-C-D-C-B-A, ou des copolymères à blocs multiples basés sur les configurations précitées, les blocs polymères étant respectivement choisis parmi le groupe constitué par : le polystyrène, la poly-4-vinylpyridine, la poly-2-vinylpyridine, le polybutadiène, le polyisoprène, le poly(éthylène-stat-butylène), le poly(éthylène-alt-propylène), le polysiloxane, l'oxyde de polyalkylène, le poly-ε-caprolactone, le polylactide, le méthacrylate de polyalkyle, l'acide polyméthacrylique, l'acrylate de polyalkyle, l'acide polyacrylique, le méthacrylate de polyhydroxyéthyle, le polyacrylamide, le poly-N-alkylacrylamide, le polysulfone, le polyaniline, le polypyrrole, le polytriazole, le polyvinylimidazole, le polytétrazole, le polyéthylène diamine, l'alcool polyvinylique, le polyvinylpyrrolidone, le polyoxadiazole, l'acide polyvinylsulfonique, l'acide polyvinylphosphonique ou les polymères ayant des groupes d'ammonium quaternaire.

6. Procédé selon l'une des revendications 1 à 5, **caractérisé en ce que** les copolymères séquencés et les blocs polymères ont une polydispersité inférieure à 1,2.

7. Procédé selon l'une des revendications 1 à 6, **caractérisé en ce que** les longueurs de polymères desdits au moins deux blocs polymères du copolymère séquencé amphiphile ont, l'un par rapport à l'autre, un rapport de longueur compris entre environ 3:1 et 6:1.

8. Procédé selon l'une des revendications 1 à 7, **caractérisé en ce que** le copolymère séquencé a un poids moléculaire compris entre 100 kDa et 600 kDa, en particulier entre 170 kDa et 320 kDa, et/ou le polymère représente une proportion en poids comprise entre 10 % en poids et 40 % en poids, en particulier entre 15 % en poids et 25 % en poids, de la solution.

9. Procédé selon l'une des revendications 1 à 8, **caractérisé en ce que** la solution de polymères est pressée en appliquant une surpression comprise entre 0,05 et 0,25 bar à travers la filière et/ou la distance de chute (13) a une longueur comprise entre 10 cm et 100 cm.

10. Procédé selon l'une des revendications 1 à 9, **caractérisé en ce que** plusieurs solvants sont utilisés, les blocs polymères du copolymère séquencé dans les différents solvants étant solubles à différents degrés et les solvants sont volatiles à différents degrés.

11. Procédé selon l'une des revendications 1 à 10, **caractérisé en ce qu'**un précipitant polaire ou apolaire, ou un mélange de précipitants, est respectivement utilisé en tant que précipitant dans la colonne de liquide et dans le bain de précipitation (14) après la distance de chute (13), indépendamment l'un de l'autre, en particulier de l'eau et/ou du méthanol et/ou de l'éthanol et/ou de l'acétone et/ou un mélange constitué de deux ou plus de deux précipitants ou du diéthyléther, et un solvant polaire ou apolaire étant respectivement utilisé en tant que solvant dans la solution de polymères et dans la colonne de liquide, indépendamment l'un de l'autre, en particulier du diméthylformamide et/ou du diméthylacétamide et/ou de la N-méthylpyrrolidone et/ou du diméthylsulfoxyde et/ou du tétrahydrofurane et/ou un mélange constitué de deux ou plus de deux solvants, le ou les solvants étant miscibles dans la colonne de liquide avec le ou les précipitants dans la colonne de liquide.

12. Membrane polymère à fibre creuse asymétrique intégrale (16), autoporteuse, en particulier une membrane de microfiltration, d'ultrafiltration ou de nanofiltration, apte à être produite par un procédé de filage à sec/humide selon l'une des revendications 1 à 11, dans laquelle la membrane polymère à fibre creuse (16) comporte une surface extérieure de séparation active isoporeuse, qui est basée sur une formation de microphases par auto-organisation d'un copolymère amphiphile, laquelle se transforme en une structure interne spongieuse, formée par inversion de phases induite par un non-solvant, une surface interne de la membrane polymère à fibre creuse (16) étant formée poreuse en raison d'une précipitation avec une colonne de liquide interne à partir d'un solvant ayant une activité réduite en termes de précipitation, les pores de la surface extérieure de séparation active présentant un rapport entre le diamètre de pores maximal et le diamètre de pores minimal inférieur à 3.

13. Module de filtration, en particulier un module de microfiltration, un module d'ultrafiltration ou un module de nanofiltration, comportant au moins une membrane polymère à fibre creuse (16) selon la revendication 12.

14. Utilisation d'une membrane polymère à fibre creuse asymétrique intégrale (16) selon la revendication 12 pour la microfiltration, l'ultrafiltration ou la nanofiltration, en particulier pour la purification de protéines et d'autres substances nanoparticulaires.
